# EUROPÄISCHE PATENTSCHRIFT

(11) **EP 1 487 626 B1**
(45) Veröffentlichungstag und Bekanntmachung des Hinweises auf die Patenterteilung: **29.03.2006**
(21) Anmeldenummer: 02795136.7
(22) Anmeldetag: 10.12.2002
(51) Int. Cl.: B29C 45/17

(54) **FORMSCHLIESSEINHEIT MIT EINER FORMHÖHENVERSTELLUNG SOWIE VERFAHREN ZU DEREN BETÄTIGUNG**
MOLD CLOSING DEVICE WITH MOLD HEIGHT ADJUSTMENT AND METHOD FOR ACTUATION THEREOF
DISPOSITIF DE FERMETURE D'UN MOULE A REGLAGE EN HAUTEUR DU MOULE, ET PROCEDE PERMETTANT SA MISE EN ACTION

(30) Priorität: 12.03.2002 DE 10210869
(43) Veröffentlichungstag der Anmeldung: 22.12.2004
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2002/013981
(87) Internationale Veröffentlichungsnummer: WO 2003/076161

(56) Entgegenhaltungen:
- DE-A- 19 812 741
- US-A- 4 281 977

## Beschreibung

Die Erfindung betrifft eine Fonnschließeinheit für eine Spritzgießmaschine zur Verarbeitung von Kunststoffen und anderer plastifizierbarer Massen mit einer Formhöhenverstellung nach dem Oberbegriff des Anspruches 1 sowie ein Verfahren zur Betätigung einer derartigen Formhöhenverstellung nach dem Oberbegriff des Anspruches 8.

Eine derartige Formhöhenversteltung ist aus der DE 198 12 741 A1 dergestalt bekannt, dass die Formschtießeinheit in ihrer eigenen Schließeinrichtung die Stellung des Abstützelements verstellen kann. Hierzu wird am beweglichen Formträger als auch am Abstützelement für die Schließeinrichtung jeweils eine Verriegelungseinrichtung vorgesehen. Im Normalzustand für den Herstellungsprozess ist das Abstützelement verriegelt und der bewegliche Formträger zur Bewegung freigesetzt, also entriegelt. Soll die Formhöhe verändert werden, wird der bewegliche Formträger verriegelt und das Abstützelement freigesetzt, so dass bei Betätigung der Schließeinrichtung die Stellung des Abstützelements verändert werden kann. Eine derartige Vorrichtung ist jedoch ab einer bestimmten Maschinengröße nicht mehr geeignet, das Abstützelement gleichmäßig und ohne Verkanten zu verschieben.

Aus der US 4,281,977 A ist eine Formhöhenverstellung bekannt, bei der an Holmen, die meist am stationären Formträger festgelegt sind und dem beweglichen Formträger zur Führung dienen, Gewindeabschnitte vorgesehen sind, die mit Muttern in Verbindung stehen. Diese Muttern werden über einen gesonderten Antrieb zur Formhöhenverstellung angetrieben. Die Muttern weisen auf ihrer Außenseite einen Zahnkranz auf, so dass sie entweder mit einem Zahnkranz oder mit einem Zahnriemen betätigt werden können.

Zur Formhöhenverstellung und Verriegelung einer Abstützplatte für den Schließmechanismus ist es von der Engel Vertriebs GmbH, A-4311 Schwertberg, Österreich, 1996, bekannt, Holme mit Rillen zu versehen und an diesen Rillen zwei Halbmuttem dadurch festzuspannen, dass die Halbmuttem in radialer Richtung aufeinander zu bewegt werden, bis es zur Anlage am gerillten Bereich der Führungsholme kommen.

Von der Firma Husky Injektion Molding Systems, Moduline E-Series Machines, September 1996 ist eine derartige Verriegelung mit einem Bajonettverschluss bekannt. Der Holm besitzt hierzu Bereiche, in die ein Schließkolben eingreifen kann, sowie Bereiche, entlang derer der radial auf den Führungsholme bewegliche Schließkolben gleiten kann. Durch eine Drehung des Schließkolbens wird ein förmschlüssiger Eingriff bewirkt, so dass an diesem Kolben zugleich zumindest ein Teil der Schließkraft ebenfalls aufgebracht werden kann.

Ausgehend von diesem Stand der Technik liegt der vorliegenden Erfindung die Aufgabe zugrunde, eine Formhöhenverstellung für eine Formschließeinheit und ein Verfahren zur Betätigung der Formhöhenverstellung zur Verfügung zu stellen, die die an der Maschine ohnehin vorhandenen sich bewegenden Teile zu ihrer Betätigung vorteilhaft ausnutzt.

Diese Aufgabe wird durch eine Formschließeinheit mit den Merkmalen des Anspruchs 1 sowie durch ein Verfahren mit den Merkmalen des Anspruches 8 gelöst.

Formschließeinheit und Verfahren sind so ausgebildet, dass für den beweglichen Formträger innerhalb seines Bewegungsbereiches eine Lösestellung vorgesehen wird, in der der Formträger, sobald er in diese Lösestellung überführt wird, die Verriegelungseinrichtung betätigen, also entriegeln kann. Dies führt zu einer verhältnismäßig einfachen Entriegelung, da der Formträger nur noch in diesen Bereich überführt werden muss und im folgenden das Abstützelement verstellt werden kann. Befindet sich der bewegliche Formträger nicht in diesem Bereich, ist das Abstützelement selbsttätig verriegelt. Es müssen also nicht zusätzliche aufwändige Sensoren oder Übertragungsmechanismen vorgesehen sein. Der Aufbau der Verriegelungseinrichtung kann beliebig ausgebildet sein, sofern sichergestellt ist, dass der bewegliche Formträger, sobald er in der Lösestellung ist, die Entriegelung der Verriegelungseinrichtung des Abstützelements bewirkt.

Weitere Vorteile ergeben sich aus den Unteransprüchen.

Im Folgenden wird die Erfindung anhand eines Ausführungsbeispieles näher erläutert. Es zeigen:
- Fig. 1: eine Seitenansicht einer Formschließeinheit für eine Spritzgießmaschine,
- Fig. 2: ein vergrößerten Ausschnitt aus Fig. 1 im Bereich der Verriegelungseinrichtung,
- Fig. 3: eine Rückansicht der Spritzgießmaschine gemäß Fig. 1 von links,
- Fig. 4: eine Ansicht nach den Linien 4 - 4 von Fig. 3 mit einem Schnitt durch die Verriegelungseinrichtung.

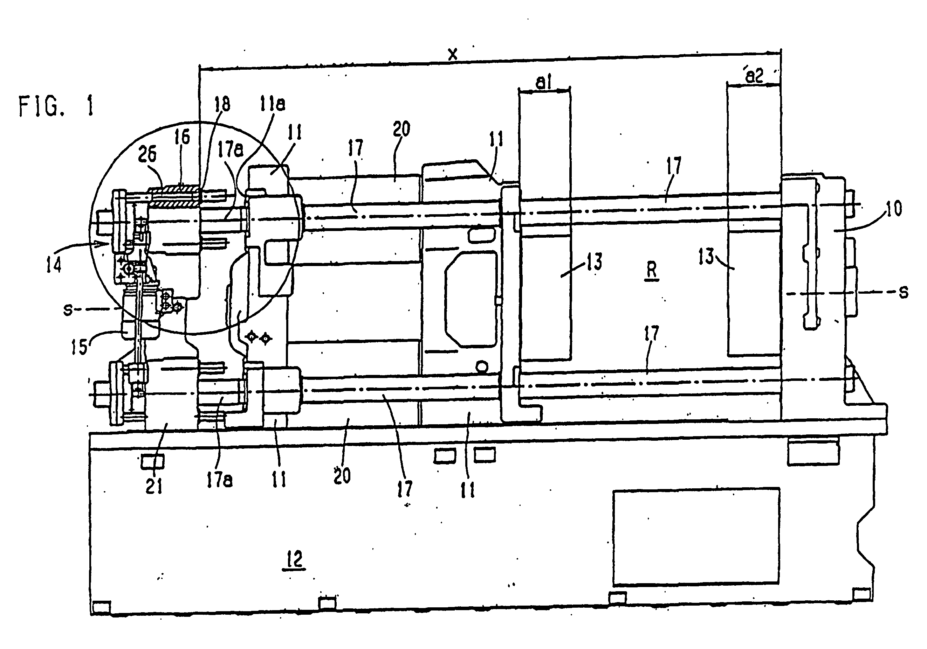

Fig. 1 zeigt die Seitenansicht einer Formschließeinheit für eine Kunststoffspritzgießmaschine, die zur Verarbeitung von Kunststoffen und anderer plastifizierbarer Massen wie pulvrige oder keramische Massen eingesetzt werden kann. Auf dem Maschinenfuß 12 ist die Formschließeinheit angeordnet, die einen stationären Formträger 10 und einen beweglichen Formträger 11 aufweist. Zwischen den Formträgem können in einem Formspannraum R Spritzgießformen 13 veränderlicher Höhe angeordnet werden. Die Höhe der gesamten Form ist das Maß, das sich aus der Summe der Maße a₁ und a₂ ergibt. Der bewegliche Formträger 11 ist als Rahmen aufgebaut, der gemäß Fig. 1 die rechte Platte, an der die eine Hälfte der Spritzgießform 13 befestigbar ist, und eine rückseitige Platte aufinreist, die über die Zylinder der Schließeinrichtung 20 miteinander verbunden sind. Es ergibt sich damit eine Kastenplatte, die durch die zeichnerisch nicht dargestellten Kolben der Schließeinrichtung betätigt wird. Diese Kolben stützen sich üblicherweise am Abstützelement 21 ab. Anstelle der beschriebenen hydraulischen oder pneumatischen Kolben-Zylindereinheiten als Schließeinrichtung 20 können jedoch auch elektromechanische Antriebe oder Linearantriebe oder andere Antriebsmittel vorgesehen sein.

Im Ausführungsbeispiel sind Führungselemente 17 als Führungsholme vorgesehen, die am stationären Formträger 10 gelagert sind. Sie dienen im Ausführungsbeispiel dem beweglichen Formträger 11 als auch dem Abstützelement 21 zur Führung bei ihrer noch zu beschreibenden Bewegung. Grundsätzlich kann die im Folgenden beschriebene Formhöhenverstellung jedoch auch an einer holmlosen Spritzgießmaschine eingesetzt werden, bei der stationärer Formträger und beweglicher Formträger über ein um den Formspannraum R herumgeführtes Kraftübertragungselement z.B. einen oder mehrere Bügel miteinander verbunden sind. In diesem Fall ist nur ein entsprechender Bewegungsbereich für das Abstützelement zu ermöglichen, wobei dieses dann in geeigneter Weise z.B. am einen Ende des Bügels geführt sein muss.

Dem Abstützelement 21 zugeordnet ist eine Formhöhenverstellung 14, die zur Verstellung des Abstandes x zwischen dem stationären Formträger 10 und dem Abstützelement 21 unter Bewegung des Abstützelements dient. Durch Veränderung der Formhöhe lässt sich die Schließeinrichtung optimieren. Wird bei einer kleinen Spritzgießform 13 das Abstützelement in Fig. 1 nach rechts verschoben, so werden zunächst die Zykluszeiten verringert, da der bewegliche Formträger die Form nicht im gleichen Maß öffnen muss, wie dies z.B. in Fig. 1 dargestellt ist. Durch die Verstellung lässt sich aber auch der Weg der Schließeinrichtung optimieren, also z.B. bei einer kleinen Spritzgießform minimieren, so dass die Druckaufbauzeiten drastisch minimiert werden können. Der Vorteil der sich dadurch ergibt, kann zu einer Reduzierung der Zykluszeiten von mehreren 1/10 Sekunden beitragen.

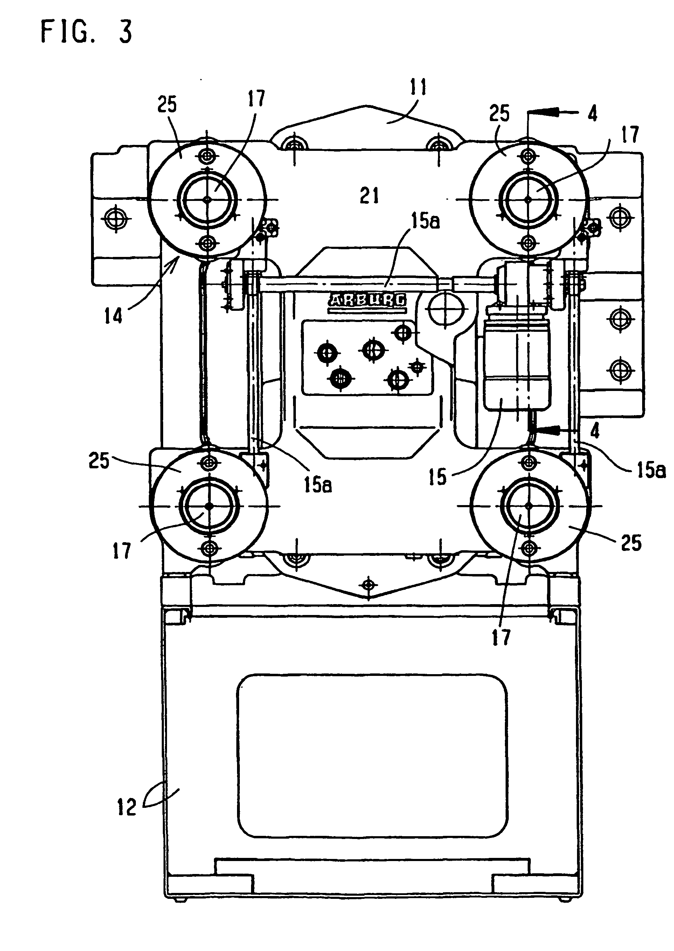

Um eine selbsttätige Formhöhenverstellung zu ermöglichen, ist ein Antrieb 15 vorgesehen, der am deutlichsten in Fig. 3 zu erkennen ist. Der Antrieb 15 betätigt über zeichnerisch nicht dargestellte Umlenkmechanismen verschiedene Spindeln 15a, die ihrerseits in Eingriff mit der jedem Holm 17 zugeordneten Formhöhenverstellung 14 stehen. Sobald also durch Überführen des beweglichen Formträgers 11 in die Lösestellung die Formhöhenverstellung entriegelt ist, kann über den Antrieb 15 und die Spindeln 15a an jedem der Führungselemente 17 gleichzeitig die Betätigung der Formhöhenverstellung erfolgen.

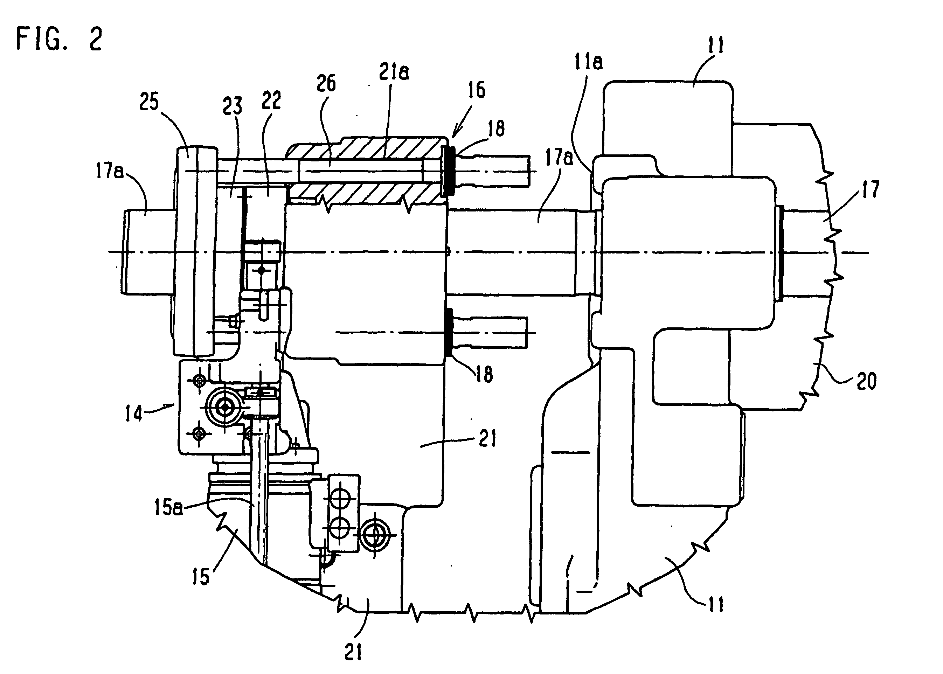

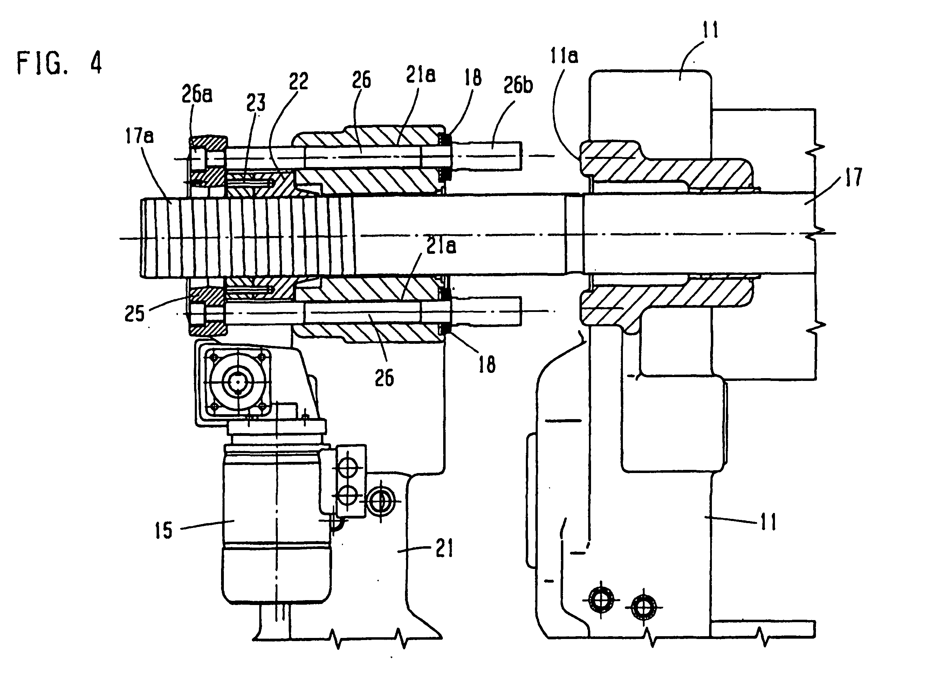

Um sicherzustellen, dass das Abstützelement zuverlässig an den Holmen gehalten ist, wenn die nicht unbeträchtlichen Kräfte von der Schließeinrichtung 20 während des Spritzgießzyklus aufgebracht werden, ist eine Verriegelungseinrichtung 16 zur Verriegelung des Abstützelements 21 in seiner jeweiligen Stellung vorgesehen. Die Wirkung und Betätigung der Verriegelungseinrichtung wird im Folgenden anhand der Figuren 2 und 4 näher erläutert.

Zur Betätigung der Verriegelungseinrichtung wird im Bewegungsbereich des beweglichen Formträgers 11 eine Lösestellung vorgesehen, die die Entriegelung der Verriegelungseinrichtung 16 bewirkt, wenn der bewegliche Formträger 11 in der Lösestellung ist. Es sind also grundsätzlich keine zusätzlichen Sensoren erforderlich, sondern lediglich das Überführen des beweglichen Formträgers in die Lösestellung sorgt dafür, dass die Verriegelungseinrichtung entriegelt wird, so dass im Anschluss daran der Antrieb 15 der Formhöhenverstellung 14 das Abstützelement 21 unter Veränderung des Abstandes x verstellen kann. Diese Lösestellung wird außerhalb und am vom stationären Formträger 10 abgewandten Ende des während des eigentlichen Spritzgießprozess erforderlichen Bewegungsbereichs des beweglichen Formträgers 11 vorgesehen. Soll also nach Abschluss der Herstellung eines bestimmten Spritzteils eine Formhöhenveränderung vorgenommen werden, "überfährt" der bewegliche Formträger den bisher zugelassenen Bewegungsbereich und wird in die Lösestellung gebracht. In dieser Lösestellung sind Hilfsmittel vorgesehen, die dafür sorgen, dass die Verriegelungseinrichtung 16 entriegelt werden kann. Die Entriegelung muss dabei nicht wie im Folgenden ausgeführt erfolgen; statt der noch zu beschreibenden Bolzen 26 und der elastischen Mittel 18 können auch Hebelmechanismen oder Ähnliches vorgesehen sein, die nur sicherstellen sollten, dass die bestehende Verriegelung aufgehoben wird. Die Formhöhenverstellung 14 selbst ist am Abstützelement 21 angeordnet. Sie besitzt gemäß Fig. 2 und 4 Muttern, die mit Gewindeabschnitten 17a an den Führungselementen 17 für das Abstützelement 21 in Eingriff stehen. Wird also der Antrieb 15 betätigt, so werden über die Spindel 15a diese Muttern angetrieben.

Im Ausführungsbeispiel sind vorzugsweise an jedem Führungselement wenigstens zwei Muttern 22, 23 vorgesehen, die in Folge der Wirkung elastischer Mittel 18 der Verriegelungseinrichtung 16 verspannt sind. Die Muttern 22, 23 liegen einerseits an der Spannhülse 25 und andererseits am Abstützelement 21 an, wobei beide durch an ihnen gelagerten Verbindungsmittel 26 miteinander in Wirkverbindung stehen und unter der Wirkung der elastischen Mittel 18 die Muttern 22, 23 verspannen. Anstelle der hier gegebenen Kontermutterlösung kann auch mit nur einer Mutter gearbeitet werden, sofern auf andere Weise eine entsprechende Festlegung der Mutter in ihrer jeweiligen Stellung erfolgt. Die folgende Lösung hat jedoch den Vorteil, dass die Wirkung der Muttern und die Wirkung der Verriegelungseinrichtung, obwohl sie in unmittelbarer Nähe voneinander wirken, voneinander getrennt sind. Die Spannwirkung wird insofern z.B. durch elastische Mittel aufgebracht, die der bewegliche Formträger in der Lösestellung außer Wirkung setzt. Es ist daher nicht erforderlich, die Verspannung manuell zu lösen, um anschließend das Abstützelement bewegen zu können, sondern die Verstellbarkeit des Abstützelements ist gegeben, sobald die Wirkung der elastischen Mittel durch den beweglichen Formträger aufgehoben wird.

Die Verbindungsmittel 26 sind Bolzen, die eine Bohrung 21 a des Abstützelements durchdringen. Zwischen Bolzen und Spannhülse 25 oder- wie im Ausführungsbeispiel - Abstützelement 21 sind als elastische Mittel 18 ausgebildeten Federscheiben gelagert. Fig. 4 zeigt, dass der Bolzen 26 mit einer Schraube 26a an der Spannhülse 25 befestigt ist und am Abstützelement-21 durch die elastischen Mittel 18 anliegt. Dies wird dadurch erreicht, dass der Bolzen an dem von seinem Kopf 26a abgewandten Ende einen Bereich 26b größeren Durchmesser aufweist, der den elastischen Mitteln 18 als Lagerung dient. Anstelle der Federscheiben können andere geeignete elastische Mittel vorgesehen sein, sofern sie durch die Überführung des beweglichen Formträgers 11 in seine Lösestellung betätigbar sind.

Die Verbindungsmittel 26, also die Bolzen, stehen in Richtung auf den beweglichen Formträger 11 bis in den Bereich der Lösestellung über. Der bewegliche Formträger 11 seinerseits besitzt eine Betätigungsfläche 11a, die in Lösestellung des beweglichen Formträgers die Verbindungsmittel 26 unter Aufhebung der Verriegelungswirkung der elastischen Mittel 18 betätigt. Wird also in Fig. 4 der bewegliche Formträger 11 weiter nach links gefahren, gelangt die Betätigungsfläche 11a zur Anlage am Bolzen. Wird der bewegliche Formträger noch weiter nach links gefahren, wird der Bolzen gegen die Kraft der elastischen Mittel 18 nach links gepresst, so dass die Spannwirkung zwischen den Muttern 22 und 23 aufgehoben wird. Die Muttern sind in bekannter Weise mittels Radialsicherungsstiften verspannt, deren Wirkung ebenfalls durch die Aufhebung der Wirkung der elastischen Mittel aufgehoben wird. Nun kann der Antrieb 15 die Muttern verstellen. Die Betätigungsfläche 11a ist im Bereich einer Bohrung des beweglichen Formträgers 11 angeordnet, die von den als Führungsholmen ausgebildeten Führungselementen 17 durchgriffen ist.

Sobald der bewegliche Formträger 11 die elastischen Mittel betätigt, liegt der bewegliche Formträger großflächig an den elastischen Elementen 18 an. Da diese Anlage durch eine Bewegung entlang der Führungselemente 17 erfolgt, wird die Kraft damit im Wesentlichen linear auf die elastischen Mittel und die Muttern 22,23 eingeleitet. Gleichzeitig ergibt sich ein geschlossener Kraftverlauf zwischen beweglichem Formträger 11 und Abstützelement 21. Dadurch werden die Kräfte momentfrei aufgebracht, so dass sich beim Verstellen des Abstützelements 21 kein Verkanten einstellt. Die Verstellung erfolgt nahezu reibfrei. Weitere zusätzliche Hilfsmittel sind nicht erforderlich.

Grundsätzlich ist sicherzustellen, dass der bewegliche Formträger während des Herstellungsprozesses in seinem üblichen Bewegungsbereich bleibt und nicht in die Lösestellung gelangt. Hierzu werden die ohnehin vorhandenen Spannbolzen lediglich durch das Abstützelement hindurchgeführt, so dass sie bis in den Bereich der Lösestellung überstehen. Wird nun der bewegliche Formträger in diese Stellung überführt, ergibt sich die gewünschte Lösung.

Zur Formhöhenverstellung sind folgende Schritte erforderlich:
- Lösen des Abstützelements 21 aus seiner auf die bisherige Formhöhe abgestimmten Stellung unter Öffnen der Verriegelungseinrichtung 16,
- Verändern des Abstands x zwischen dem stationären Formträger und Abstützelement 21 unter Bewegung des Abstützelements 21 mittels des Antriebs 15,
- Festlegen des Abstützelements 21 in der geänderten, auf die neue Formhöhe abgestimmten Stellung durch Verriegeln der Verriegelungseinrichtung 16.

Das Lösen des Abstützelements 21 erfolgt dadurch, dass der bewegliche Formträger 11 in die Lösestellung überführt wird. Die Überführung in die Lösestellung bewirkt die Entriegelung der Verriegelungseinheit 16. Der bewegliche Formträger 11 wird in diese Position vorzugsweise durch seine eigene Schließeinrichtung 20 überführt, so dass dazu keine weiteren Mittel als die ohnehin vorhandene Schließeinrichtung erforderlich sind. Während der Veränderung des Abstandes x werden Abstützelement 21 und beweglicher Formträger 11 gemeinsam bewegt. Es sollte also eine Abstimmung zwischen der Wirkung der Schließeinrichtung 20 und dem Antrieb 15 erfolgen.

Zur Veränderung des Abstandes x bzw. der Formhöhe betätigt der Antrieb 15 die Muttern 22, 23 und verstellt sie entlang der Gewindeabschnitte 17a der Führungselemente 17. Dies ist jedoch erst möglich, wenn die grundsätzlich unter der Wirkung der elastischen Mittel 18 der Verriegelungseinrichtung 16 gekonterten Muttern entkontert sind. Der bewegliche Formträger 11 bringt also die Verbindungsmittel 26 gegen die Kraft der elastischen Mittel 18 in eine Stellung, die eine Aufhebung der Konterwirkung ermöglicht.

### Bezugszeichenliste

- 10: stationärer Formträger
- 11: beweglicher Formträger
- 11a: Betätigungsfläche
- 12: Maschinenfuß
- 13: Spritzgießform
- 14: Formhöhenverstellung
- 15: Antrieb für 14
- 15a: Spindeln
- 16: Verriegelungseinrichtung
- 17: Führungselement
- 17a: Gewindeabschnitt
- 18: elastische Mittel
- 20: Schließeinrichtung
- 21: Abstützelement
- 21a: Bohrung
- 22,23: Mutter
- 25: Spannhülse
- 26: Bolzen
- 26a: Schraube
- 26b: Bereich größeren Durchmesser

- a: Formhöhe
- s-s: Schließrichtung
- x: Abstand zwischen 10 und 21
- R: Formspannraum

## Patentansprüche

1. Formschließeinheit mit einer Vorrichtung zum selbsttätigen Anpassen an die Formhöhe von Spritzgießformen (13) veränderlicher Höhe (a) gemessen in Schließrichtung (s-s) für eine Spritzgießmaschine zur Verarbeitung von Kunststoffen und anderer plastifizierbarer Materialien mit
- einem stationären Formträger (10),
- einem beweglichen Formträger (11),
- einer Schließeinrichtung zum Bewegen des beweglichen Formträgers (11) in Schließrichtung (s-s) auf den stationären Formträger (10) zu und von diesem weg,
- einer zwischen den Formträgem (10,11) aufnehmbaren Spritzgießform (13) veränderlicher Höhe (a) gemessen in Schließrichtung (s-s),
- einem Abstützelement (21) für die Schließeinrichtung,
- einer Formhöhenverstellung (14) zur Verstellung des Abstands (x) zwischen stationärem Formträger (10) und Abstützelement (21) unter Bewegung des Abstützelements,
- einem Antrieb (15) zur selbsttätigen Verstellung der Formhöhenverstellung (14),
- einer Verriegelungseinrichtung (16) zur Verriegelung des Abstützelements (21) in seiner jeweiligen Stellung,
**dadurch gekennzeichnet**, das im Bewegungsbereich des beweglichen Formträgers (11) eine Lösestellung zur Entriegelung der Verriegelungseinrichtung (16) vorgesehen ist, wenn der bewegliche Formträger (11) in der Lösestellung ist.

2. Fomnschließeinheit nach Anspruch 1, **dadurch gekennzeichnet, dass** die Lösestellung außerhalb und am vom stationären Formträger (10) abgewandten Ende des für den Spritzgießprozess erforderlichen Bewegungsbereichs des beweglichen Formträgers (11) ist.

3. Formschließeinheit nach Anspruch 1 oder 2, **dadurch gekennzeichnet, dass** die am Abstützelement (21) angeordnete Formhöhenverstellung (14) Muttern (22,23) aufweist, die mit Gewindeabschnitten (17a) an Führungselementen (17) für das Abstützelement (21) in Eingriff stehen und mittels des Antriebs (15) verstellbar sind.

4. Formschließeinheit nach einem der vorhergehenden Ansprüche, **dadurch gekennzeichnet, dass** wenigstens je zwei Muttern (22,23) in Folge der Wirkung elastischer Mittel (18) der Verriegelungseinrichtung (16) verspannt sind und dass die Muttern (22, 23) an einer Spannhülse (25) und am Abstützelement (21) anliegen, die beide durch an ihnen gelagerte Verbindungsmittel (26) miteinander in Wirkverbindung stehen und unter der Wirkung elastischer Mittel (18) die Muttern (22, 23) verspannen.

5. Formschließeinheit nach einem der vorhergehenden Ansprüche, **dadurch gekennzeichnet, dass** die Verbindungsmittel (26) wenigstens das Abstützelement (21) durchdringende Bolzen sind, und dass zwischen den Bolzen und einer Spannhülse (24) und/oder dem Abstützelement als elastische Mittel (18) ausgebildete Federscheiben gelagert sind.

6. Formschließeinheit nach einem der vorhergehenden Ansprüche, **dadurch gekennzeichnet, dass** am Abstützelement (21) gelagerte Verbindungsmittel (26) in Richtung auf den beweglichen Formträger (11) bis in den Bereich der Lösestellung überstehen und dass der bewegliche Formträger eine Betätigungsfläche (11 a) aufweist, die in Lösestellung des beweglichen Formträgers die Verbindungsmittel (26) unter Aufhebung der Verriegelungswirkung der elastischen Mittel (18) betätigt.

7. Formschließeinheit nach Anspruch 6, **dadurch gekennzeichnet, dass** die Betätigungsfläche (11a) im Bereich einer als Führung ausgebildeten Bohrung zur Führung des beweglichen Formträgers an den als Führungsholmen ausgebildeten Führungselementen (17) angeordnet ist.

8. Verfahren zur selbsttätigen Anpassung der Formhöhe von Spritzgießformen veränderlicher Höhe (a) gemessen in Schließrichtung (s-s) an einer Spritzgießmaschine zur Verarbeitung von Kunststoffen und anderer plastifizierbarer Materialien mit
- einem stationären Formträger (1 0),
- einem beweglichen Formträger (11),
- einem Abstützelement (21) für eine Schließeinrichtung (20) zum Bewegen des beweglichen Formträgers (10) auf den stationären Formträger (11) zu und von diesem weg,
- einer Formhöhenverstellung (14),
- einem Antrieb (15) zur Formhöhenverstellung,
- einer Verriegelungseinrichtung (16) zur Verriegelung des Abstützelements (21) in seiner jeweiligen Stellung,
wobei das Verfahren folgende Schritte aufweist:
- Lösen des Abstützelements (21) aus seiner auf die bisherige Formhöhe abgestimmten Stellung unter Öffnen der Veniegelungseinrichtung (16),
- Verändern des Abstands (x) zwischen stationären Formträger (10) und Abstützelement (21) unter Bewegung des Abstützelements (21) mittels des Antriebs (15),
- Festlegen des Abstützelements (21) in der geänderten, auf die neue Formhöhe abgestimmten Stellung durch Verriegeln der Verriegelungseinrichtung (16),
**dadurch gekennzeichnet, dass** der bewegliche Formträger (11) in einer Lösestellung zum Lösen des Abstützelements (21) die Verriegelungseinrichtung (16) entriegelt.

9. Verfahren nach Anspruch 8, **dadurch gekennzeichnet, dass** der bewegliche Formträger (11) mittels seiner Schließeinrichtung (20) in eine Stellung zur Betätigung der Verriegelungseinrichtung (16) überführt wird.

10. Verfahren nach Anspruch 9, **dadurch gekennzeichnet, dass** die Stellung am vom stationären Formträger (10) abgewandten Ende jenseits des Bewegungsbereichs des beweglichen Formträgers (11) während des Produktionsprozesses liegt.

11. Verfahren nach einem der Ansprüche 8 bis 10, **dadurch gekennzeichnet, dass** während der Veränderung des Abstands (a) Abstützelement (21) und beweglicher Formträger (11) gemeinsam bewegt werden.

12. Verfahren nach einem der Ansprüche 8 bis 11, **dadurch gekennzeichnet, dass** zur Veränderung des Abstands (a) der Antrieb (15) Muttern (22, 23) betätigt und entlang von Gewindeabschnitten (17a) verstellt, die im festgelegten Zustand durch die Verriegelungseinrichtung (16) gekontert sind, und dass der bewegliche Formträger (11) beim Heranfahren an das Abstützelement (21) die elastischen Mittel (18) entlastet und die Konterwirkung zwischen den Muttern (22, 23) aufhebt.

13. Verfahren nach einem der Ansprüche 8 bis 12, **dadurch gekennzeichnet, dass** durch die Bewegung des beweglichen Formträgers (11) in die Lösestellung entlang der Führungselemente (17) die Kraft zur Aufhebung der Wirkung der elastischen Mittel im Wesentlichen linear auf die elastischen Mittel (18) eingeleitet wird.

## Claims

1. Mould closing unit having an apparatus for automatically adapting to the mould height of injection mould assemblies (13) of variable height (a) measured in the closing direction (s-s) for an injection moulding machine for processing plastics materials and other plasticisable substances, having
- a stationary mould carrier (10),
- a movable mould carrier (11),
- a closing device for moving the movable mould carrier (11) in the closing direction (s-s) towards the stationary mould carrier (10) and away from the stationary mould carrier (10),
- an injection mould assembly (13) of variable height (a) measured in the closing direction (s-s), said injection mould assembly being accomodatable between the mould carriers (10, 11),
- a supporting element (21) for the closing device,
- a mould height adjusting means (14) for adjusting the distance (x) between stationary mould carrier (10) and supporting element (21) by moving the supporting element,
- a driving means (15) for automatically adjusting the mould height adjusting means (14),
- a locking device (16) for locking the supporting element (21) in its respective position,
**characterised in that** a release position is provided for effecting the unlocking of the locking device (16) in the displacement region of the movable mould carrier (11), when the movable mould carrier (11) is in the release position.

2. Mould closing unit according to claim 1, **characterised in that** the release position is externally of and at the end, which is remote from the stationary mould carrier (10), of the displacement region of the movable mould carrier (11), which displacement region is necessary for the injection moulding process.

3. Mould closing unit according to claim 1 or 2, **characterised in that** the mould height adjusting means (14) that is disposed on the supporting element (13) comprises nuts (22, 23), which engage by means of threaded portions (17a) on guiding elements (17) for the supporting element (21) and are adjustable by means of the driving means (15).

4. Mould closing unit according to one of the preceding claims, **characterised in that** at least two nuts (22, 23) in each case are clamped as a result of the effect of resilient means (18) of the locking device (16), and that the nuts (22, 23) abut against a clamping sleeve (25) and a supporting element (21), both of which are in operative connection through connecting means (26) mounted thereon and clamp the nuts (22, 23) under the effect of resilient means (18).

5. Mould closing unit according to one of the preceding claims, **characterised in that** the connecting means (26) are at least bolts which penetrate the supporting element (21), and **in that** spring washers in the form of resilient means (18) are mounted between the bolts and a clamping sleeve (24) and/or the supporting element.

6. Mould closing unit according to the preceding claims, **characterised in that** connecting means (26), which are mounted on the supporting element (21), project in the direction of the movable mould carrier (11) as far as into the region of the release position, and **in that** the movable mould carrier includes an actuating face (11 a), which, in the release position of the movable mould carrier, actuates the connecting means (26) by overcoming the locking effect of the resilient means (18).

7. Mould closing unit according to claim 6, **characterised in that** the actuating face (11 a) is disposed in the region of a bore, which is in the form of a guiding means, for guiding the movable mould carrier to the guide elements (17), which are in the form of guide braces.

8. Method for automatically adapting the mould height of injection mould assemblies of variable height (a) measured in closing direction (s-s) on an injection moulding machine for processing plastics materials and other plasticisable materials, having
- a stationary mould carrier (10),
- a movable mould carrier (11),
- a supporting element (21) for a closing device (20) for moving the movable mould carrier (10) towards the stationary mould carrier (11) and away from the stationary mould carrier (11),
- a mould height adjusting means (14),
- a driving means (15) for adjusting the mould height,
- a locking device (16) for locking the supporting element (21) in its respective position,
wherein the method includes the following steps:
- releasing the supporting element (21) from its position, which was coordinated with the previous mould height, by opening the locking device (16),
- changing the distance (x) between stationary mould carrier (10) and supporting element (21) by moving the supporting element (21) by means of the driving means (15),
- securing the supporting element (21) in the changed position, which is coordinated with the new mould height, by locking the locking device (16),
**characterised in that** the movable mould carrier (11), in a release position for releasing the supporting element (21), unlocks the locking device (16).

9. Method according to claim 8, **characterised in that** the movable mould carrier (11) is transferred by means of its closing device (20) into a position for actuating the locking device (16).

10. Method according to claim 9, **characterised in that** the position at the end remote from the stationary mould carrier (10) is on the other side of the displacement region of the movable mould carrier (11) during the production process.

11. Method according to one of claims 8 to 10, **characterised in that** during the changing of the distance (a), supporting element (21) and movable mould carrier (11) are moved together.

12. Method according to one of claims 8 to 11, **characterised in that**, for changing the distance (a), the driving means (15) actuates nuts (22, 23) and adjusts them along threaded portions (17a), which, in the secured condition, are checked by the locking device (16), and that when the movable mould carrier (11) approaches the supporting element (21), it releases the resilient means (18) and overcomes the checking effect between the nuts (22, 23).

13. Method according to one of claims 8 to 12, **characterised in that**, through the movement of the movable mould carrier (11) into the release position along the guide elements (17), the force for lifting the effect of the resilient means is introduced to the resilient means (18) in a substantially linear manner.

## Revendications

1. Unité de fermeture de moule comprenant un dispositif d'adaptation automatique à la hauteur du moule de moules de moulage par injection (13) de hauteur variable (a) mesurée dans le sens de la fermeture (s-s) pour une machine de moulage par injection pour le traitement de matières plastiques et d'autres matières plastifiables, comportant
- un porte-moule fixe (10),
- un porte-moule mobile (11),
- un dispositif de fermeture pour déplacer le porte-moule mobile (11) dans le sens de la fermeture (s-s) vers le porte-moule fixe (10) et pour l'en éloigner,
- un moule de moulage par injection (13) de hauteur variable (a) mesurée dans le sens de la fermeture (s-s), pouvant être logé entre les porte-moule (10,11),
- un élément d'appui (21) pour le dispositif de fermeture,
- un dispositif de réglage de la hauteur du moule (14) pour régler l'écart (x) entre le porte-moule fixe (10) et l'élément d'appui (21) en déplaçant l'élément d'appui,
- un entraînement (15) pour le réglage automatique du dispositif de réglage de la hauteur du moule (14),
- un dispositif de verrouillage (16) pour verrouiller l'élément d'appui (21) dans sa position respective,
**caractérisée en ce que**, dans la zone de déplacement du porte-moule mobile (11), une position de desserrage est prévue pour déverrouiller le dispositif de verrouillage (16) lorsque le porte-moule mobile (11) est dans la position de desserrage.

2. Unité de fermeture de moule selon la revendication 1, **caractérisée en ce que** la position de desserrage est en dehors et à l'extrémité, opposée au porte-moule fixe (10), de la zone de déplacement du porte-moule mobile (11) requise pour le processus de moulage par injection.

3. Unité de fermeture de moule selon la revendication 1 ou 2, **caractérisée en ce que** le dispositif de réglage de la hauteur du moule (14) situé sur l'élément d'appui (21) comporte des écrous (22, 23) qui sont en prise avec des sections filetées (17a) sur les éléments de guidage (17) pour l'élément d'appui (21) et sont déplaçables au moyen de l'entraînement (15).

4. Unité de fermeture de moule selon l'une des revendications précédentes, **caractérisée en ce qu'**au moins respectivement deux écrous (22, 23) sont serrés suite à l'action de moyens élastiques (18) du dispositif de verrouillage (16) et **en ce que** les écrous (22, 23) sont appliqués sur une douille de serrage (25) et sur l'élément d'appui (21) qui sont tous les deux en liaison active l'un avec l'autre par des moyens de liaison (26) logés dessus et serrent les écrous (22, 23) sous l'action de moyens élastiques (18).

5. Unité de fermeture de moule selon l'une des revendications précédentes, **caractérisée en ce que** les moyens de liaison (26) sont des boulons traversant au moins l'élément d'appui (21) et **en ce que** des rondelles élastiques réalisées en tant que moyens élastiques (18) sont logées entre les boulons et une douille de serrage (24) et/ou l'élément d'appui.

6. Unité de fermeture de moule selon l'une des revendications précédentes, **caractérisée en ce que** des moyens de liaison (26) logés sur l'élément d'appui (21) dépassent dans la direction du porte-moule mobile (11) jusque dans la zone de la position de desserrage et **en ce que** le porte-moule mobile comporte une surface d'actionnement (11a) qui, dans la position de desserrage du porte-moule mobile, actionne les moyens de liaison (26) en annulant l'action de verrouillage des moyens élastiques (18).

7. Unité de fermeture de moule selon la revendication 6, **caractérisée en ce que** la surface d'actionnement (11a) est située dans la zone d'un perçage réalisé en tant que guidage pour guider le porte-moule mobile sur les éléments de guidage (17) réalisés en tant que de colonnes de guidage.

8. Procédé d'adaptation automatique de la hauteur du moule de moules de moulage par injection de hauteur variable (a) mesurée dans le sens de la fermeture (s-s) sur une machine de moulage par injection pour le traitement de matières plastiques et d'autres matières plastifiables, comportant
- un porte-moule fixe (10),
- un porte-moule mobile (11),
- un élément d'appui (21) pour un dispositif de fermeture (20) pour déplacer le porte-moule mobile (10) vers le porte-moule fixe (11) et pour l'en éloigner,
- un dispositif de réglage de la hauteur du moule (14),
- un entraînement (15) pour le réglage de la hauteur du moule,
- un dispositif de verrouillage (16) pour verrouiller l'élément d'appui (21) dans sa position respective,
le procédé comprenant les étapes suivantes:
- desserrage de l'élément d'appui (21) hors de sa position adaptée à la hauteur que le moule avait jusqu'alors en ouvrant le dispositif de verrouillage (16);
- modification de l'écart (x) entre le porte-moule fixe (10) et l'élément d'appui (21) en déplaçant l'élément d'appui (21) au moyen de l'entraînement (15);
- fixation de l'élément d'appui (21) dans la position modifiée adaptée à la nouvelle hauteur du moule par verrouillage du dispositif de verrouillage (16),
**caractérisé en ce que**, dans une position de desserrage pour desserrer l'élément d'appui (21), le porte-moule mobile (11) déverrouille le dispositif de verrouillage (16).

9. Procédé selon la revendication 8, **caractérisé en ce que** le porte-moule mobile (11) est amené dans une position d'actionnement du dispositif de verrouillage (16) au moyen de son dispositif de fermeture (20).

10. Procédé selon la revendication 9, **caractérisé en ce que** la position à l'extrémité opposée au porte-moule fixe (10) se trouve au-delà de la zone de déplacement du porte-moule mobile (11) pendant le processus de production.

11. Procédé selon l'une des revendications 8 à 10, **caractérisé en ce que**, pendant la modification de l'écart (a), l'élément d'appui (21) et le porte-moule mobile (11) sont déplacés conjointement.

12. Procédé selon l'une des revendications 8 à 11, **caractérisé en ce que**, pour modifier l'écart (a), l'entraînement (15) actionne des écrous (22, 23) et les déplace le long de sections filetées (17a) qui, à l'état fixé, sont bloqués par le dispositif de verrouillage (16), et **en ce que** le porte-moule mobile (11), lorsqu'il se rapproche de l'élément d'appui (21), détend les moyens élastiques (18) et annule l'action de blocage entre les écrous (22, 23).

13. Procédé selon l'une des revendications 8 à 12, **caractérisé en ce que**, par le déplacement du porte-moule mobile (11) passant en position de desserrage le long des éléments de guidage (17), la force d'annulation de l'action des moyens élastiques est introduite de manière pour l'essentiel linéaire sur les moyens élastiques (18).
